# EUROPÄISCHE PATENTANMELDUNG

(11) **EP 3 654 061 A1**
(43) Veröffentlichungstag der Anmeldung: **20.05.2020**
(21) Anmeldenummer: 18214740.5
(22) Anmeldetag: 20.12.2018
(51) Int. Cl.: G01S 13/87, G01S 17/87, G01S 17/89, G01S 13/89, G01S 7/48, G01S 7/02, G01S 7/00, G01S 13/93

(54) **SYSTEM UND VERFAHREN ZUR POSITIONSBESTIMMUNG**

(30) Priorität: 16.11.2018 EP 18206820
(71) Anmelder: Swareflex GmbH, 6134 Vomp (AT)
(72) Erfinder: Flir, Anton, 6134 Vomp (AT); Oberdanner, Johannes, 6094 Axams (AT)
(74) Vertreter: dompatent von Kreisler Selting Werner - Partnerschaft von Patent- und Rechtsanwälten mbB

(57) **Zusammenfassung**

Verfahren zur Positionsbestimmung mit den Schritten Beleuchten eines Reflektors, Erfassen des vom Reflektor reflektierten Lichts, Ermitteln einer eindeutigen Reflektor-ID anhand des erfassten reflektierten Lichts und Zuordnen der Reflektor-ID zu einer Position.

## Beschreibung

Die vorliegende Erfindung betrifft einen Reflektor zur Anbringung entlang eines Fahrwegs, ein Verfahren zur Positionsbestimmung eines solchen Reflektors oder anhand eines solchen Reflektors sowie ein entsprechendes System.

Moderne Fahrzeuge weisen eine Vielzahl von Fahrassistenzsystemen auf, welche Sensoren wie beispielsweise Kameras aufweisen, um eine sichere Steuerung des Fahrzeugs oder Zusatzfunktionen wie beispielsweise einem Spurassistenten zu gewährleisten. Hierbei ist insbesondere im Bereich der autonomen Fahrzeuge die Kenntnis über die Position des Fahrzeugs immanent. Eine solche Positionierung kann innerhalb des Umfelds beispielsweise an Straßenmarkierungen oder dergleichen durch Bilderfassung mittels Kameras erfolgen. Hierdurch kann die Position und Ausrichtung des Fahrzeugs innerhalb des unmittelbaren Umfelds ermittelt werden. Eine rein Bildgestützte Positionsermittlung ist jedoch aufwändig und dadurch fehleranfällig.

Die Bestimmung der globalen Position erfolgt üblicherweise über satellitengestützte Navigationssysteme (GNSS) wie beispielsweise GPS, Galileo, GLONASS oder Baidou. Dabei ist zu berücksichtigen, dass durch die Satellitennavigationssysteme eine Positionsinformation geliefert wird, welche unter Umständen eine große Ungenauigkeit von mehreren Metern aufweist, so dass diese Positionsinformation unter Umständen nicht für die Navigation beziehungsweise Steuerung eines autonomen Fahrzeugs ausreicht.

Weiterhin ist es für die Ortung, Navigation und Positionsbestimmung von Fahrzeugen erforderlich, aktuelle Karten zugrunde zu legen. Hierbei ergibt sich jedoch das Problem, dass bei einem geänderten Straßenverlauf bis zur Aktualisierung des Kartenmaterials dieses aufgrund der Änderung nicht mehr zutreffend ist und somit Fehler bei der Navigation und Steuerung von Fahrzeugen auftreten können, wodurch eine zuverlässige Navigation nicht mehr möglich ist. Für eine solche Aktualisierung muss der geänderte Straßenverlauf erfasst werden, üblicherweise durch ein Messfahrzeug, und die so gewonnenen Daten der Kartenaktualisierung zugrunde gelegt werden.

Aufgabe der vorliegenden Erfindung ist es ein Verfahren und System bereitzustellen zur einfachen Positionsbestimmung von Fahrzeugen und zur schnellen Kartenaktualisierung.

Die Aufgabe wird gelöst durch einen Reflektor gemäß Anspruch 1 durch ein Verfahren gemäß Anspruch 5 und ein System gemäß Anspruch 11.

Der erfindungsgemäße Reflektor zur Anbringung entlang eines Fahrwegs weist einen Grundkörper auf. Dabei weist der Grundkörper mindestens ein Reflexionselement auf. Das mindestens eine Reflexionselement weist mindestens zwei unterschiedliche Bereiche auf, welche bei Beleuchtung, beispielsweise durch ein Fahrzeug, eine unterschiedliche Reflektivität aufweisen. Alternativ oder zusätzlich hierzu weist der Grundkörper mehr als ein Reflexionselement auf, wobei mindestens zwei Reflexionselemente bei Beleuchtung, beispielsweise durch ein Fahrzeug, eine unterschiedliche Reflektivität aufweisen. Aufgrund der unterschiedlichen Reflektivität der Bereiche beziehungsweise der Reflexionselemente ist es möglich, den Reflektor eindeutig zu identifizieren und dem Reflektor beispielsweise eine Reflektor-ID (Reflektor-Identifikation) zuzuordnen, welche den jeweiligen Reflektor eindeutig identifiziert. Hierbei sind die Bereiche und/oder die Reflexionselemente in einer festen Anordnung zueinander durch das Grundelement, so dass das Reflexionsbild, welches durch das reflektierte Licht erzeugt wird ein eindeutiges Muster ergibt, welches herangezogen werden kann zur Bestimmung der Reflektor-ID. Der Reflektor kann somit entlang eines Fahrwegs angebracht werden. Bei dem Fahrweg kann es sich beispielsweise um jede Art von Straßenfahrwegen und dergleichen handeln. Das Licht eines vorbeifahrenden Fahrzeugs wird vom Reflektor reflektiert, wobei mindestens zwei unterschiedliche Bereiche oder mindestens zwei Reflexionselemente eine unterschiedliche Reflektivität aufweisen, so dass reflektierte Licht sich in der Helligkeit und/oder Farbe unterscheiden. Üblicherweise erfolgt die Beleuchtung des Reflektors mit weißem Licht. So kann sich die Reflektivität der unterschiedlichen Bereiche beziehungsweise der Reflexionselemente für lediglich einen Teil des Spektrums des weißen Lichts unterscheiden, so dass das reflektierte Licht jener Bereich oder Reflexionselement, von dem es reflektiert wurde, eine unterschiedliche Farbe aufweisen.

Vorzugsweise weist der Grundkörper eine Vorderseite und eine Rückseite auf, wobei die Vorderseite im montierten Zustand entgegen der Fahrtrichtung angeordnet ist, so dass die Vorderseite durch die Hauptscheinwerfer eines Fahrzeugs beleuchtet werden. Insbesondere kann das Reflexionselement oder können die Reflexionselemente der Vorderseite und der Rückseite eine unterschiedliche Farbe aufweisen, so dass die Vorderseite und Rückseite eindeutig unterschieden werden kann.

Vorzugsweise weist das Reflexionselement eine Vielzahl von Bereichen auf, wobei insbesondere die Anzahl an Bereichen größer ist als 10, bevorzugt größer ist als 20 und besonders bevorzugt größer ist als 50. Dabei weisen eine Vielzahl von Bereichen eine unterschiedliche Reflektivität auf. Somit weisen mindestens zwei unterschiedliche Bereiche der Vielzahl von vorgesehenen Bereichen, mehr als zwei der Vielzahl von vorgesehenen Bereichen und insbesondere alle Bereiche eine unterschiedliche Reflektivität auf. Alternativ oder zusätzlich hierzu ist eine Vielzahl von Reflexionselementen vorgesehen, wobei die Anzahl der Reflexionselemente insbesondere größer ist als 10, bevorzugt größer ist als 20 und besonders bevorzugt größer ist als 50. Dabei weisen mindestens zwei, mehr als zwei oder alle Reflexionselemente der Vielzahl von vorgesehenen Reflexionselementen eine unterschiedliche Reflektivität auf. Somit ist aufgrund der großen Anzahl an Bereich- oder Reflexionselementen eine eindeutige Reflektor-ID aufgrund der Reflektivität der Reflexionselemente oder der unterschiedlichen Bereiche gegeben.

Vorzugsweise besteht das Reflexionselement aus Glas.

Vorzugsweise ist die Reflektivität der Bereiche beziehungsweise der Reflexionselemente statistisch verteilt. Aufgrund der großen Anzahl an Bereich oder Reflexionselementen ist es somit möglich, Reflektoren eindeutig zu identifizieren. Weiterhin ist es aufgrund der statistischen Verteilung der Reflektivität nicht erforderlich, die Eigenschaften der Bereiche beziehungsweise Reflexionselemente gezielt zu beeinflussen, so dass eine vorgegebene Reflektivität des jeweiligen Bereichs oder Reflexionselements erzielt wird. Die vorgesehene statistische Fluktuation der Reflektivität wird dabei ausgenutzt Bereiche unterschiedlicher Reflektivität oder Reflexionselemente unterschiedlicher Reflektivität zu erzeugen, welche zueinander in einer festgelegten räumlichen Anordnung angeordnet sind.

Weiterhin betrifft die vorliegende Erfindung ein Verfahren zur Positionsbestimmung mit den Schritten: Beleuchten eines Reflektors mittels eines Fahrzeugs. Hierbei handelt es sich insbesondere um einen Reflektor wie vorstehend beschrieben. Sodann wird das vom Reflektor reflektierte Licht als Reflexionsbild erfasst. Hierbei kann die Erfassung des Reflexionsbildes durch das Fahrzeug erfolgen, welches den Reflektor beleuchtet hat oder durch ein weiteres Fahrzeug. Sodann wird aus dem erfassten reflektierten Licht bzw. dem Reflexionsbild eine eindeutige Reflektor-ID bestimmt. Sodann erfolgt ein Zuordnen einer Position zu der Reflektor-ID. Da die Position des Reflektors fest und unveränderbar ist, kann anhand der eindeutigen Reflektor-ID eine eindeutige Zuordnung der Position erfolgen.

Vorzugsweise ist die Position zu der jeweiligen Reflektor-ID hinterlegt beispielsweise in einem Speichermodul oder einem Server, so dass nach dem Bestimmen der Reflektor-ID die Position des Reflektors aus dem Speichermodul oder Server abgerufen werden kann. Insbesondere erfolgt in diesem Fall die Kommunikation mit dem Server über eine Drahtlos-Funkverbindung. Somit ist die Position des Reflektors bekannt und das Fahrzeug, welches die Reflektor-ID anhand des reflektierten Lichts des Reflektors ermittelt hat, kann somit diese Position verwenden zur Positionsbestimmung des Fahrzeugs selber. Somit erfolgt eine Positionsbestimmung des Fahrzeugs, in dem ein Fahrzeug den Reflektor beleuchtet, das reflektierte Licht des Reflektors durch ein Fahrzeug erfasst wird, wobei dieses Fahrzeug sodann aus dem reflektierten Licht eine eindeutige Reflektor-ID ermittelt. Nachfolgend wird dieser ermittelten Reflektor-ID eine bekannte Position, welche in einem Speichermodul oder Server oder dergleichen hinterlegt ist, zugeordnet, wodurch das Fahrzeug Kenntnis über die Position des Reflektors und hieraus Kenntnis über seine eigene Position erlangt.

Vorzugsweise wird mittels einer Positionsbestimmung, wie beispielsweise einer Satellitennavigation GNLSS, die Position für die jeweilige Reflektor-ID ermittelt und sodann für die Reflektor-ID hinterlegt, beispielsweise in einem Speichermodul oder zentral in einem Server. Insbesondere erfolgt in diesem Fall die Kommunikation mit dem Server über eine Drahtlos-Funkverbindung. Die Hinterlegung einer Position für eine bestimmte Reflektor-ID erfolgt insbesondere falls für die jeweilige Reflektor-ID noch keine Position hinterlegt worden ist. Besonders bevorzugt wird hierbei die Position für den Reflektor mit der jeweiligen Reflektor-ID aus einer Vielzahl von Positionsbestimmungen hinterlegt. Wird somit durch ein Fahrzeug ein Reflektor erfasst, zu dem noch keine Position hinterlegt wurde, wird durch eine Positionsbestimmung die Position des Reflektors ermittelt, wobei die Ungenauigkeit bei der Positionsbestimmung, beispielsweise durch GPS oder dergleichen, dadurch Rechnung getragen wird, dass eine Vielzahl von Positionsbestimmungen erfolgen, insbesondere durch eine Vielzahl unterschiedlicher Fahrzeuge, und sodann anhand einer statistischen Auswertung die exakte Position des Reflektors ermittelbar ist. Die Position des Reflektors wird sodann im Speichermodul oder im Server hinterlegt, so dass nachfolgend die Position zu der Reflektor-ID ausgelesen werden kann. Ändert sich somit der Straßenverlauf werden entlang des geänderten Straßenverlaufs neue Reflektoren insbesondere wie vorstehend beschrieben angebracht. Dabei weist jeder Reflektor eine eindeutige Reflektor-ID auf. Für jeden dieser Reflektoren wird sodann mittels der einzelnen Fahrzeuge jeweils eine Positionsbestimmung durchgeführt und anhand der Vielzahl an durchgeführten Positionsbestimmungen die Position für die jeweilige Reflektor-ID ermittelt und sodann hinterlegt. Nachfolgende Fahrzeuge können sodann anhand der hinterlegten Position des Reflektors für die jeweilige Reflektor-ID die Fahrzeugposition bestimmen. Somit kann auf einfache Weise eine Änderung des Straßenverlaufs nachverfolgt werden, ohne, dass eine zeitaufwendige gesonderte Vermessung erfolgen müsste.

Vorzugsweise werden zur Ermittlung der Reflektor-ID mittels Bilderkennung die Abmessungen des Reflektors bestimmt. Über die Kenntnisse der Abmessungen des Reflektors ist es möglich, beispielsweise den Abstand zwischen Fahrzeug und Reflektor zu ermitteln, so dass aus der Position des Reflektors die Position des Fahrzeugs bestimmt werden kann. Gleichzeitig ist es möglich, durch die Erkennung der Abmessung des Reflektors den Reflektortyp zu bestimmen als Zusatzinformation zur Reflektor-ID.

Vorzugsweise wird zur Bestimmung der Reflektor-ID die erfasste Reflexion bzw. das Reflexionsbild des Reflektors in Segmente unterteilt. Insbesondere umfasst jedes Segment ein oder mehr Bereiche beziehungsweise ein oder mehr Reflexionselemente. Sodann wird für jedes Segment ein Mittelwert gebildet über die Helligkeit des reflektierten Lichts beziehungsweise den Farbwert des reflektierten Lichts. Sodann erfolgt anhand des Mittelwerts eine Diskretisierung, wobei mittels der Diskretisierung dem Mittelwert ein Zahlenwert zugeordnet wird, insbesondere eine Ganzzahl. Insbesondere handelt es sich bei der Diskretisierung um eine Schwellwertdiskriminierung, so dass der Mittelwert abgebildet wird auf die Werte 0 und 1. Anhand des Zahlenwertes für die jeweiligen Segmente wird sodann die Reflektor-ID ermittelt. Insbesondere besteht die Reflektor-ID aus einer Aneinanderreihung der Zahlenwerte der einzelnen Segmente.

Vorzugsweise erfolgt eine Normierung der erfassten Reflexion bzw. des Reflexionsbildes auf die Helligkeit oder einen Farbwert insbesondere unter Kenntnis der Lichtfarbe des Hauptscheinwerfers des Fahrzeugs. Somit ist die Erfassung der Reflektor-ID unabhängig von der tatsächlichen Beleuchtung und kann auch erfolgen bei unterschiedlichen Hauptscheinwerfern unterschiedlicher Fahrzeuge.

Weiterhin betrifft die vorliegende Erfindung ein System zur Positionsbestimmung mit einer Vielzahl von Reflektoren insbesondere wie vorstehend beschrieben, welche entlang einer Straße oder eines Fahrwegs angeordnet sind. Weiterhin ist eine in einem Fahrzeug angeordnete Beleuchtung vorgesehen zur Beleuchtung eines Reflektors, wobei das Licht der Beleuchtung vom Reflektor reflektiert wird. Weiterhin ist in einem Fahrzeug eine Erfassungseinheit zur Erfassung des vom Reflektor reflektierten Lichts bzw. des Reflexionsbildes angeordnet. Hierbei kann es sich um ein anderes Fahrzeug handeln als das, welches den Reflektor beleuchtet. Bevorzugt handelt es sich jedoch um dasselbe Fahrzeug. Mit der Erfassungseinheit ist eine Auswertevorrichtung verbunden, wobei die Auswertevorrichtung ausgebildet ist, um dem Reflektor eine Reflektor-ID zuzuordnen anhand des erfassten reflektierten Lichts bzw. Reflexionsbildes. Dabei ist die Reflektor-ID eindeutig. Der Reflektor-ID wird sodann mittels der Auswertevorrichtung eine Position zugeordnet.

Vorzugsweise ist die Auswertevorrichtung mit einem Positionierungsmodul verbunden, so dass die Position des Fahrzeugs bei der Erfassung des reflektierten Lichts des Reflektors ermittelbar ist. Bei dem Positionierungsmodul handelt es sich beispielsweise um einen GPS-, Galileo-, GLONASS-, BEIDOU- oder GNSS-Empfänger oder ein Modul, welches aus dem verfügbaren WLAN oder GSM-Netz oder einem anderen Funknetz die Position des Fahrzeugs ermittelt.
Vorzugsweise ist die Auswertevorrichtung mit einer Speichervorrichtung verbunden, wobei die Speichervorrichtung ausgebildet ist, die Reflektor-ID und die dazugehörige Position der Erfassung des reflektierten Lichts zu speichern, welche durch das Positionierungsmodul ermittelt wurde. Alternativ oder zusätzlich hierzu ist die Auswertevorrichtung verbunden mit einem Kommunikationsmodul zur Übertragung der Reflektor-ID und der dazugehörigen erfassten Position an einen Server. Dabei kann die Kommunikation beziehungsweise Übertragung insbesondere drahtlos erfolgen mittels 3G, 4G, 5G oder einer weiteren Generation eines Telekommunikationsstandards, WiFi, WLAN, LTE, GSM, Bluetooth, ZigBee, NFC oder dergleichen. Somit werden die Reflektor-ID des Reflektors und der Ort des Reflektors an einen Server übertragen und dort gespeichert.

Vorzugsweise ist die Auswertevorrichtung mit einer Speichervorrichtung oder einem Server verbunden, wobei in der Speichervorrichtung oder dem Server zu jeder Reflektor-ID eine dazugehörige Position zugeordnet ist, so dass anhand der Reflektor-ID die Position des Reflektors und somit auch des Fahrzeugs ermittelt werden kann. Die Verbindung zum Server erfolgt dabei insbesondere drahtlos mittels 3G, 4G, 5G oder einer weiteren Generation eines Telekommunikationsstandards, WiFi, WLAN, LTG, GSM, Bluetooth, ZigBee, NFC oder dergleichen. Ist somit eine Position zu einer bestimmten Reflektor-ID in einer Speichervorrichtung oder einem Server hinterlegt, kann bei Ermitteln der jeweiligen Reflektor-ID diese Position durch das Fahrzeug abgerufen beziehungsweise ausgelesen werden. Hierdurch erhält das Fahrzeug eine eindeutige Positionsinformation aufgrund der erfassten Reflektor-ID.

Vorzugsweise sind in der Speichervorrichtung und/oder auf dem Server zu einer Reflektor-ID zusätzliche ortsgebundene Informationen hinterlegt. Bei diesen ortsgebundenen Informationen kann es sich beispielsweise um Verkehrshinweise handeln wie Geschwindigkeitsbeschränkungen, Fahrzeugbeschränkungen etwa nach Gewicht, Typ, Achslast, Umweltklasse, Anliegerfreigabe oder dergleichen, Warnhinweise, Hinweise auf Geschäfte, Restaurants, Einrichtungen der Öffentlichkeit in unmittelbarer Nähe zu dem jeweiligen Reflektor der jeweiligen Reflektor-ID. Die hinterlegten ortsgebundenen Informationen sind beispielsweise abrufbar durch die Auswertevorrichtung zur weiteren Verwendung. Insbesondere ist die Auswertevorrichtung mit einer Anzeigevorrichtung verbunden, so dass die zu einer bestimmten Reflektor-ID hinterlegten Informationen mittels der Anzeigevorrichtung angezeigt werden können und so vom Fahrer des Fahrzeugs erfasst werden.

Vorzugsweise handelt es sich bei der Erfassungseinheit um eine Kamera oder ein Lidar-System oder einen Laser-Scanner oder ein Radar-System. Solche Kameras sind weit verbreitet in modernen Fahrzeugen und insbesondere wird die Kamera gleichzeitig genutzt für weitere Fahrassistenzsysteme wie beispielsweise einem Spurassistenzsystem.

Nachfolgend wird die Erfindung anhand bevorzugter Ausführungsform unter Bezugnahme auf die beigefügten Zeichnungen näher erläutert.

Es zeigen:
- Figur 1: einen Reflektor gemäß der vorliegenden Erfindung,
- Figur 2: eine schematische Darstellung des Systems gemäß der vorliegenden Erfindung,
- Figur 3: einen schematisch dargestellten Schritt des Verfahren zur Bestimmung der Reflektor-ID gemäß einer Ausführungsform der vorliegenden Erfindung und
- Figur 4: einen weiteren Schritt des Verfahrens zur Bestimmung der Reflektor-ID gemäß einer Ausführungsform der vorliegenden Erfindung.

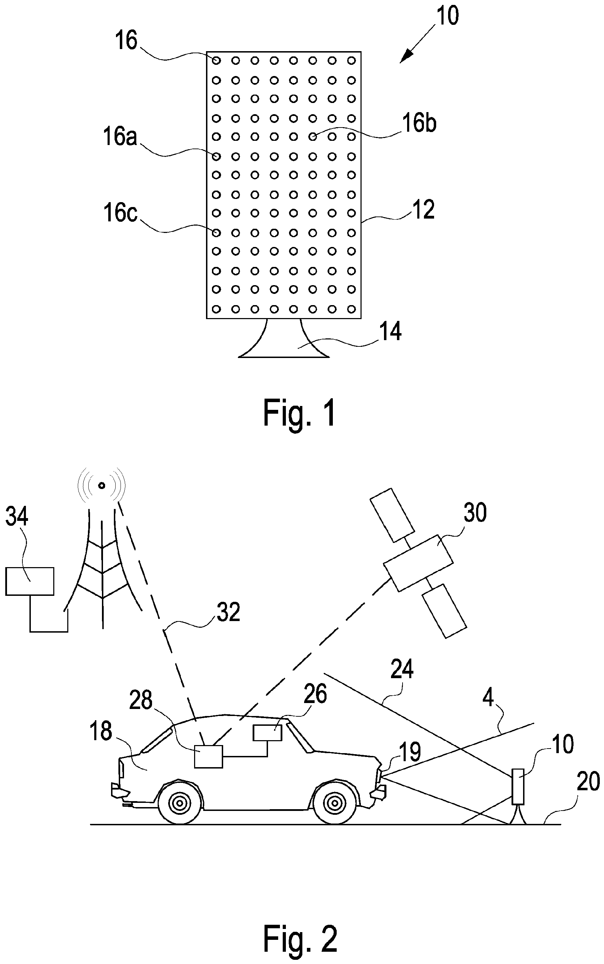

Fig. 1 zeigt einen erfindungsgemäßen Reflektor 10 zur Anbringung entlang einer Straße 20 oder eines Fahrwegs. Der Reflektor 10 weist einen Grundkörper 12 auf sowie ein Verbindungselement 14 zur Verbindung des Reflektors mit einer Straße oder einem Fahrweg auf. Dabei kann es sich bei der Straße oder dem Fahrweg um jegliche Art von Fahrweg oder Straße handeln, wie beispielsweise Autobahnen, Landstraßen, Tiefgaragen, Parkhäuser, Straßen und Wege in Städten und Ortschaften, Parkflächen, abgetrennte Industrieflächen, Containerflächen, Betonleitwände, Schallschutzmauern oder dergleichen.

Der Grundkörper 12 des Reflektors 10 weist eine Vielzahl von Reflexionselementen 16 auf. Dabei weisen mindestens zwei der Reflexionselemente 16 eine unterschiedliche Reflektivität auf. Werden die Reflexionselemente 16 mit weißem Licht einer Hauptbeleuchtung 19 eines Fahrzeugs 18 beleuchtet 21, so unterscheidet sich das von den einzelnen Reflexionselementen 16 reflektierte Licht, beispielsweise in der reflektierten Helligkeit oder der reflektierten Farbe. Dabei unterscheiden sich lediglich mindestens zwei der Reflexionselemente 16 des Reflektors 10. Insbesondere unterscheiden sich jedoch mehr als zwei Reflexionselemente 16 des Reflektors 10, wobei nicht ausgeschlossen ist, dass einzelne Reflexionselemente eine identische Reflektivität zu einem anderen Reflexionselement aufweisen. Somit weist beispielsweise ein erstes Reflexionselement 16a eine identische Reflektivität zu einem zweiten Reflexionselement 16b auf, jedoch eine unterschiedliche Reflektivität zu einem dritten Reflexionselement 16c. Die Reflexionselemente 16 weisen dabei eine feste Anordnung relativ zueinander auf dem Grundkörper 12 auf. Aufgrund der unterschiedlichen Reflektivität der einzelnen Reflexionselemente 16 des Reflektors 10 und dem sich damit ausbildenden eindeutigen Reflexionsbild kann jedem Reflektor 10, welcher entlang einer Straße 20 angeordnet ist, eine eindeutige Reflektor-ID zugeordnet werden.

Aufgrund der großen Anzahl an Reflexionselementen 16 ist es nicht erforderlich, die Reflexionseigenschaften einzelner Reflexionselemente 16 gezielt zu beeinflussen. Vielmehr ist es ausreichend, bei der großen Anzahl an Reflexionselementen 16, sofern die Reflexionseigenschaften einzelner Reflexionselemente statistisch verteilt sind, so dass ein Unterschied entsteht wodurch ein eindeutiges Muster im reflektierten Reflexionsbild entsteht.

Das Licht des Fahrzeug 18 wird vom Reflektor 10 reflektiert, wie in Fig. 2 dargestellt. Das vom Reflektor 10 reflektierte Licht 24 wird von einer Erfassungseinheit 26 erfasst, welche im vorliegenden Beispiel im selben Fahrzeug 18 angeordnet ist, wie die Hauptbeleuchtung 19, welche den Reflektor 10 beleuchtet. Bei der Erfassungseinheit handelt es sich beispielsweise um eine Kamera bzw. Lidar-System, welche bereits aus Parkassistenz- oder Spurassistenzsystemen bekannt sind und in vielen Autos bereits vorhanden sind. Die Erfassungseinheit ist mit einer Auswertevorrichtung 28 verbunden. Durch die Auswertevorrichtung 28 wird dabei dem Reflektor 10 eine eindeutige Reflektor-ID anhand des reflektierten Lichts 24 bzw. des Reflexionsbildes zugeordnet.

In einem ersten Verfahren wird die Position des Reflektors 10 bestimmt. Dieses Verfahren umfasst die Schritte:
a) Beleuchten eines Reflektors 10 mittels eines Fahrzeugs 18
b) Erfassen des vom Reflektor 10 reflektierten Lichts 24
c) Ermitteln einer eindeutigen Reflektor-ID anhand des erfassten reflektierten Lichts 24 und
d) Zuordnen der Reflektor-ID zu einer Position.

Dabei ist für die Bestimmung der Position des Reflektors 10 die Auswertevorrichtung 28 mit einem Positionierungsmodul verbunden, wobei es sich bei dem Positionierungsmodul beispielsweise um ein Satellitennavigationssystem handelt, welches Positionierungsinformationen eines Satelliten 30 empfängt. Hieraus lässt sich die Position des Fahrzeugs 18 zum Zeitpunkt der Erfassung des reflektierten Licht 24 bestimmen. Diese Positionsinformation wird sodann der Reflektor-ID zugeordnet. Die Reflektor-ID mit der zugeordneten Position kann dabei in einem Speichermodul hinterlegt werden oder mittels einer Drahtloskommunikationsverbindung 32 an einen Server 34 übertragen werden und dort gespeichert werden. Insbesondere werden somit aus einer Vielzahl von erfassten Positionen für ein und denselben Reflektor 10 eine exakte Position des Reflektors 10 im Server 34 hinterlegt, wobei aufgrund der Vielzahl der erfassten Positionen Ungenauigkeiten in der Positionsbestimmung anhand des Satellitennavigationssystems 30 behoben werden können durch eine statistische Auswertung der Vielzahl der erfassten Positionen. Wird somit ein neuer Reflektor entlang einer Straße 20 aufgestellt, so wird anhand des vorstehend beschriebenen Verfahrens die Position des Reflektors 10 durch Fahrzeuge 18 eindeutig bestimmt, wobei der Reflektor-ID des Reflektors 10 dieser Position zugeordnet wird. Ändert sich somit der Straßenverlauf, wodurch neue Reflektoren entlang des geänderten Straßenverlaufs aufgestellt werden, kann dieser geänderte Straßenverlauf durch die einzelnen Fahrzeuge detektiert werden und herangezogen werden zur Aktualisierung der einer Navigation zu Grunde liegenden Karte.

In einem zweiten Verfahren wird anhand des Reflektors die Position des Fahrzeugs 18 bestimmt. Das Verfahren weist die folgenden Schritte auf:
a) Beleuchten eines Reflektors 10 mittels eines Fahrzeugs 18
b) Erfassen des vom Reflektor 10 reflektierten Lichts 24
c) Ermitteln einer eindeutigen Reflektor-ID anhand des erfassten reflektierten Lichts 24 und
d) Zuordnen der Reflektor-ID zu einer Position.

Dabei erfolgt die Zuordnung der Position zu der ermittelten Reflektor-ID durch Abrufen der Position, welche zu der Reflektor-ID in einem Speichermodul oder einem Server 34 hinterlegt ist. Das Fahrzeug 18 erfasst somit die Reflektor-ID des Reflektors 10 und ruft insbesondere über eine Drahtloskommunikationsverbindung 32 die Position, welche der so erfassten Reflektor-ID zugeordnet ist, von einem Server 34 ab. Das Fahrzeug 18 kennt somit die Position des Reflektors 10 und kann hieraus auf einfache Weise die exakte Position des Fahrzeugs 18 selbst ermitteln.

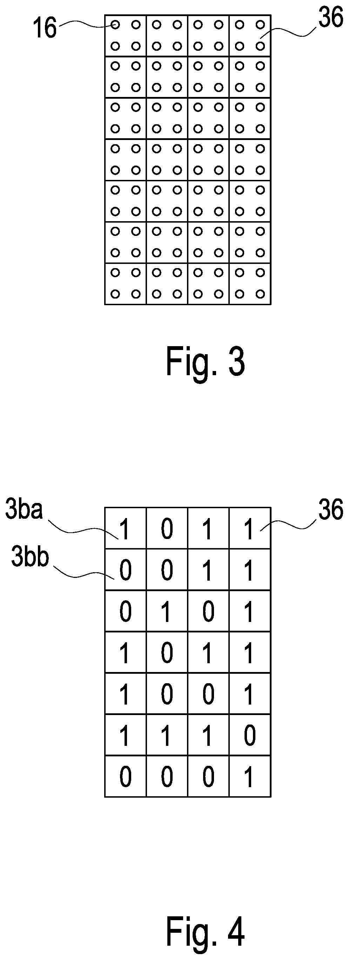

Vorzugsweise erfolgt die Bestimmung der Reflektor-ID, indem das reflektierte Licht als erfasstes Reflexionsbild, gezeigt in Fig. 3, in eine Vielzahl von Segmenten 36 unterteilt wird. Im Beispiel, gezeigt in Fig. 3, weist dabei jedes Segment 36 genau vier Reflexionselemente auf. Selbstverständlich ist die Erfindung hierauf nicht beschränkt, so dass auch mehr oder weniger Reflexionselemente von einem Segment umfasst sein können. Insbesondere weist jedes Segment 36 genau ein Reflexionselement 16 auf.

Sodann wird für jedes Segment 36 ein Mittelwert der erfassten Helligkeit oder der erfassten Farbe ermittelt. Nachfolgend erfolgt ein Vergleich des so erfolgten Mittelwerts mit einem Schwellwert, wobei jedem Segment ein diskreter Wert 0 oder 1 zugeordnet wird, sofern entweder der Schwellwert nicht überschritten wird ("0") oder der Schwellwert überschritten wird ("1"). Selbstverständlich kann die Zuordnung auch anders erfolgen und insbesondere können die Mittelwerte der Helligkeit und Farbe auf andere Zahlenwerte diskretisiert werden. Hierbei können insbesondere auch Zahlenwerte größer als 1 verwendet werden.

Im vorliegenden Beispiel erfolgt jedoch lediglich ein Vergleich mit einem Grenzwert, so dass jedem Segment eine "0" oder "1" zugeordnet wird. In einem ersten Segment 36a überschreitet die reflektierte Helligkeit einen vorgegebenen Grenzwert, so dass diesem ersten Segment 36a eine "1" zugeordnet wird. Dahingegen überschreitet der Mittelwert der Helligkeit in einem zweiten Segment 36b den Grenzwert nicht, so dass diesem zweiten Segment 36b eine "0" zugeordnet wird. Anhand der so ermittelten Zahlenwerte aus den einzelnen Segmenten 36 lässt sich eine Reflektor-ID bestimmen. Die Reflektor-ID kann sich beispielsweise ergeben durch zeilenweise Auslesen der einzelnen Segmente 36, so dass sich für das Beispiel der Fig. 4 die Reflektor-ID ergibt zu "1011 0011 0101 1011 1001 1110 0001". Aufgrund der Segmentierung des Reflexionsbildes im vorliegenden Beispiel in 4 x 7 Segmente, ergeben sich somit 2²⁸ verschiedene Reflektor-IDs, welche vergeben werden können, jedoch ist die vorliegende Erfindung nicht auf die Anzahl der gewählten Segmente beschränkt, so dass auch mehr oder weniger Segmente vorgesehen sein können bei der Bestimmung der Reflektor-ID.

Aufgrund des erfindungsgemäßen Reflektors ist eine eindeutige Identifizierung des Reflektors möglich. Somit kann dem Reflektor eine Position zugeordnet werden. Eine solche Zuordnung erfolgt zunächst durch eine Positionsbestimmung des erfassenden Fahrzeugs, wobei die Position zu der Reflektor-ID sodann zentral, beispielsweise in einem Server, hinterlegt wird. Nachfolgende Fahrzeuge können sodann die zu der Reflektor-ID hinterlegte Position aus dem Server abrufen bei Erfassung des Reflektors und hieraus unabhängig von beispielsweise einem globalen Satellitennavigationssystem exakt ihre Position bestimmen.

## Patentansprüche

1. Reflektor zur Anbringung entlang eines Fahrwegs, mit
einem Grundkörper,
wobei der Grundkörper mindestens ein Reflexionselement aufweist und das mindestens eine Reflexionselement mindestens zwei Bereiche aufweist, welche bei Beleuchtung eine unterschiedliche Reflektivität aufweisen
und/oder
wobei der Grundkörper mehr als ein Reflexionselement aufweist und mindestens zwei Reflexionselemente bei Beleuchtung eine unterschiedliche Reflektivität aufweisen.

2. Reflektor nach Anspruch 1, **dadurch gekennzeichnet, dass** das Reflexionselement eine Vielzahl von Bereichen aufweist und/oder eine Vielzahl von Reflexionselementen, wobei insbesondere die Anzahl an Bereichen und/oder Reflexionselementen größer ist als 10, bevorzugt größer ist als 20 und besonders bevorzugt größer ist als 50.

3. Reflektor nach Anspruch 1 oder 2, **dadurch gekennzeichnet, dass** das Reflexionselement aus Glas besteht.

4. Verfahren zur Positionsbestimmung mit den Schritten:
a. Beleuchten eines Reflektors insbesondere gemäß einem der Ansprüche 1 bis 3;
b. Erfassen des vom Reflektor reflektieren Lichts;
c. Ermitteln einer eindeutigen Reflektor-ID anhand des erfassten reflektierten Lichts; und
d. Zuordnen der Reflektor-ID zu einer Position.

5. Verfahren nach Anspruch 4, bei welchem die Position zu der Reflektor-ID hinterlegt ist.

6. Verfahren nach Anspruch 4 oder 5, bei welchem mittels einer Positionsbestimmung die Position für die jeweilige Reflektor-ID ermittelt wird insbesondere aus einer Vielzahl von Positionsbestimmungen für eine Reflektor-ID.

7. Verfahren nach einem der Ansprüche 4 bis 6, bei welchem zur Ermittlung der Reflektor-ID mittels Bilderkennung die Abmessungen des Reflektors bestimmt werden.

8. Verfahren nach einem der Ansprüche 4 bis 7, bei welchem die erfasste Reflektion des Reflektors in Segmente unterteilt wird, wobei für jedes Segment ein Mittelwert gebildet wird und anhand des Mittelwerts eine Diskretisierung des reflektierten Lichts erfolgt insbesondere anhand eines vorgegebenen Schwellwerts.

9. Verfahren nach einem der Ansprüche 4 bis 8, bei welchem eine Normierung der erfassten Reflexion erfolgt auf die Helligkeit oder einen Farbwert.

10. System zur Positionsbestimmung mit
einer Vielzahl von Reflektoren insbesondere gemäß einem der Ansprüche 1 bis 3, welche entlang einer Straße oder eines Fahrwegs angeordnet sind,
einer in einem Fahrzeug angeordneten Beleuchtung zur Beleuchtung eines Reflektors, wobei das Licht der Beleuchtung vom Reflektor reflektiert wird,
einer Erfassungseinheit zur Erfassung des vom Reflektor reflektierten Lichts und
einer mit der Erfassungseinheit verbundenen Auswertevorrichtung, wobei die Auswertevorrichtung ausgebildet ist um dem Reflektor eine Reflektor-ID zuzuordnen anhand des erfassten reflektierten Lichts, wobei der Reflektor-ID eine Position zugeordnet werden kann.

11. System nach Anspruch 10, **dadurch gekennzeichnet, dass** die Auswertevorrichtung mit einem Positionierungsmodul verbunden ist, so dass die Position des Fahrzeugs bei der Erfassung des reflektierten Lichts.

12. System nach Anspruch 11, **dadurch gekennzeichnet, dass** die Auswertevorrichtung mit einer Speichervorrichtung verbunden ist, wobei die Speichervorrichtung ausgebildet ist die Reflektor-ID und die Position der Erfassung zu speichern und/oder die Auswertevorrichtung verbunden ist mit einem Kommunikationsmodul zur Übertragung der Reflektor-ID und der Position der Erfassung an einen Server.

13. System nach Anspruch 12, **dadurch gekennzeichnet, dass** zu einer oder mehr als einer Reflektor-ID in der Speichervorrichtung und/oder dem Server ortsgebundene Informationen hinterlegt sind.

14. System nach einem der Ansprüche 10 bis 13, **dadurch gekennzeichnet, dass** die Auswertevorrichtung mit einer Speichervorrichtung verbunden ist, wobei in der Speichervorrichtung zu jeder Reflektor-ID eine Position zugeordnet ist, so dass anhand der Reflektor-ID die Position des Fahrzeugs ermittelt werden kann.

15. System nach einem der Ansprüche 10 bis 14, **dadurch gekennzeichnet, dass** es sich bei der Erfassungseinheit um eine Kamera, ein Lidar-System ein Laser-Scanner oder ein Radar-System handelt.
